# EUROPÄISCHE PATENTSCHRIFT

(11) **EP 2 917 602 B1**
(45) Veröffentlichungstag und Bekanntmachung des Hinweises auf die Patenterteilung: **23.09.2020**
(21) Anmeldenummer: 13826996.4
(22) Anmeldetag: 06.11.2013
(51) Int. Cl.: F16D 48/02, F16D 25/08

(54) **HYDRAULISCHE STRECKE ZWISCHEN EINEM GEBERZYLINDER UND EINEM NEHMERZYLINDER, INSBESONDERE IN FORM EINES DECKELFESTEN AUSRÜCKERS UND DRUCKÜBERSETZER**
HYDRAULIC LINE BETWEEN A MASTER CYLINDER AND A SLAVE CYLINDER, IN PARTICULAR IN THE FORM OF A RELEASE MECHANISM SECURED TO THE COVER, AND A PRESSURE INTENSIFIER
PARCOURS HYDRAULIQUE ENTRE UN CYLINDRE ÉMETTEUR ET UN CYLINDRE RÉCEPTEUR, EN PARTICULIER SOUS FORME DE DISPOSITIF DE DÉBRAYAGE SOLIDAIRE DU PLATEAU DE FERMETURE ET CONVERTISSEUR DE PRESSION

(30) Priorität: 12.11.2012 DE 102012220585
(43) Veröffentlichungstag der Anmeldung: 16.09.2015
(73) Patentinhaber: Schaeffler Technologies AG & Co. KG, 91074 Herzogenaurach (DE)
(72) Erfinder: WAGNER, Philippe, 45140 Ormes (FR); DERLATH, Stefan, 39167 Irxleben (DE)
(86) Internationale Anmeldenummer: PCT/DE2013/200273
(87) Internationale Veröffentlichungsnummer: WO 2014/071943

(56) Entgegenhaltungen:
- EP-A1- 0 356 285
- EP-A1- 2 466 171
- DE-A1- 10 059 382
- DE-A1- 10 106 958
- DE-A1- 10 236 881
- DE-A1-102007 045 056
- DE-A1-102012 203 184
- FR-A1- 2 640 776
- JP-A- S63 207 734

## Beschreibung

Die Erfindung betrifft eine hydraulische Strecke zwischen einem Geberzylinder und einem Nehmerzylinder, wobei der Nehmerzylinder insbesondere in Form eines deckelfesten Ausrückers ausgebildet ist, sowie einen in der hydraulischen Strecke angeordneten Druckübersetzer.

Wie bekannt, dienen bei einem Kraftfahrzeug derartige auf der Getriebeeingangswelle angeordnete Ausrücker oder Ausrückvorrichtungen für Kupplungen, auch unter dem Begriff CSC (Concentric Slave Cylinder) bekannt, dazu, eine mit einer Kurbelwelle eines Motors verbundene Kupplungsscheibe gegen eine entsprechende Kupplungsscheibe einer Getriebewelle zu drücken. Diese Kraftübertragung auf die Kupplung kann dabei auf unterschiedliche Weise erfolgen, je nach konstruktiver Ausbildung der Ausrückvorrichtung, die durch einen mechanischen, elektrischen, hydraulischen Aufbau charakterisiert ist oder aus einer Kombination dieser Möglichkeiten gekennzeichnet ist. Bei einer hydraulisch betätigbaren Ausrückvorrichtung beispielsweise erfolgt die Kraftübertragung auf die Kupplung mittels eines Kolbens, der in einem Gehäuse der Ausrückvorrichtung axial geführt ist und über einen mit einer Hydraulikleitung verbindbaren Stutzen mit einem hydraulischen Druckmittel, wie beispielsweise Öl oder Bremsflüssigkeit, beaufschlagt wird. Eine in diese Ausrückvorrichtung integrierte Drehdurchführung dient dabei für die Sicherstellung der Zufuhr von Kühlöl in die Kupplung.
Bei einer Doppelkupplung, die sich aus zwei Kupplungen zusammensetzt, wird jede Kupplung von der ihr zugeordneten Ausrückvorrichtung betätigt.

Ist der oben beschriebene Ausrücker anstelle am Getriebegehäuse am Kupplungsdeckel befestigt, handelt es sich um einen deckelfesten Ausrücker. Bei dieser Lösung wird die Kraft zusätzlich über ein Deckellager geleitet.

Aus der Druckschrift DE 10 2010 020 332 A1 ist ein deckelfester Ausrücker bekannt. Dabei umfasst das hydraulische Kraftübertragungssystem für die Kupplungsbetätigung einen Geberzylinder, der durch eine hydraulische Druckleitung mit einem Nehmerzylinder in Fluid-Verbindung steht. Der Nehmerzylinder ist als zentraler ringförmiger Nehmerzylinder (CSC) ausgebildet, über ein Ausrücklager gelagert und betätigt eine Tellerfeder, die wiederum zur Betätigung einer Kupplung dient. Der Nehmerzylinder, der auch als Zentralausrücker bezeichnet wird, ist durch ein weiteres Lager an dem Kupplungsdeckel abgestützt beziehungsweise gelagert. Daher spricht man auch von einem deckelfesten Zentralausrücker bzw. Ausrücker. In der Druckleitung zwischen Geberzylinder und Nehmerzylinder ist ein hydraulisches Ventil angeordnet, welches dazu dient, schnelle Rückhubbewegungen des Kupplungspedals in ihrer Auswirkung auf die hydraulische Kupplungsbetätigung zu begrenzen.
Derartige deckelfeste Nehmerzylinder beinhalten ein Ausrücklager und ein zusätzliches Wälzlager zum Abstützen gegen den Kupplungsdeckel. Dadurch rotiert der Nehmerzylinder nicht mit dem Kupplungsdeckel und benötigt deshalb keine Dichtungen für eine Drehdurchführung. In einem mitdrehenden deckelfesten Geberzylinder entfallen jedoch beide Wälzlager. Dies führt zu einer Kosteneinsparung und Bauraumverkleinerung. Da auf die Wälzlager verzichtet wird, ist eine Drehdurchführung für die Hydraulikzufuhr nötig. Durch die stillstehende Hydraulikzufuhr wird das Fluid über die Drehdurchführung in den rotierenden Ausrücker geleitet. Ist der Druck ausreichend groß, wird der Ausrückkolben in axialer Richtung gegen die Tellerfederzungen der Tellerfeder der Kupplung verschoben.
Da der Druck im System überall gleich ist, wirkt dieser auch auf die Dichtungen der Drehdurchführung. Standardmäßig werden die Ausrücksysteme mit Drücken bis zu 40 bar ausgelegt. Diese hohen Drücke in Verbindung mit den hohen Gleitgeschwindigkeiten erfordern konstruktiv sehr aufwendige Dichtungen, was sich negativ auf die Kosten und den benötigten Bauraum auswirkt.

Die Druckschrift DE 101 06 958 A1 offenbart eine hydraulische Strecke mit einem Mittel zur Reduzierung des vom Geberzylinder auf den Nehmerzylinder wirkenden Betätigungsdrucks. Weiterer Stand der Technik ist in der EP 0 356 285 A1 sowie in der FR 2 640 776 A1 genannt.

Ein Druckübersetzer gemäß dem Oberbegriff des Anspruchs 1 ist aus der DE 10 2007 045056 A1 bekannt. Der dort offenbarte Druckübersetzter wird durch unterschiedlich große hydraulisch wirksame Kolbenflächen auf Geer- und Nehmerseite verwirklicht.

Aufgabe der Erfindung ist es, eine Möglichkeit für den Einsatz kostengünstiger und bauraumsparender Dichtungen für die Drehdurchführungen eines Nehmerzylinders, insbesondere in Form eines deckelfesten Ausrückers zu schaffen.

Diese Aufgabe wird mit den kennzeichnenden Merkmalen des ersten Patentanspruchs gelöst. Vorteilhafte Ausgestaltungen ergeben sich aus den Unteransprüchen.

In die hydraulische Strecke zwischen einem Geberzylinder und einem Nehmerzylinder, der insbesondere in Form eines deckelfesten Ausrückers ausgebildet ist, ist mindestens ein Mittel zur Reduzierung eines über den Geberzylinder bei Betätigung eines Kupplungspedals auf den Nehmerzylinder wirkenden Betätigungsdrucks integriert. Das Mittel ist in Form eines Druckübersetzers ausgebildet.

Dadurch ist es möglich, den Betätigungsdruck von beispielsweise 40 bar auf etwa 5 bar herunterzusetzen, bei gleichzeitiger Erhöhung der Druckfläche am Nehmerzylinder, so dass die erforderliche Betätigungskraft für die Kupplung weiter erreicht wird.

Durch diese Druckreduzierung ist es möglich, am deckelfesten Ausrücker einfachere Radialwellendichtringe zu verwenden. Des Weiteren besteht die Möglichkeit, mit der Druckübersetzung die Pedalkraftkennlinie bzw. das Betätigungsverhalten der Kupplung zu modellieren oder es bei der üblichen Kraft-Weg-Übersetzung zu belassen.

Der Druckübersetzer für die hydraulische Strecke zwischen dem Geberzylinder und dem Nehmerzylinder, weist einen ersten Anschluss zum Geberzylinder und einen zweiten Anschluss zum Nehmerzylinder auf, wobei bei Betätigung eines Kupplungspedals ein Betätigungsdruck p1 des Geberzylinders mittels eines in einem Gehäuse angeordneten Kolbens auf einen geringeren auf den Nehmerzylinder wirkenden Betätigungsdruck p2 reduzierbar ist.

Das Gehäuse weist einen ersten Anschluss zum Geberzylinder und einen zweiten Anschluss zum Nehmerzylinder auf und der Kolben ist im Gehäuse axial verschiebbar angeordnet und weist zwei unterschiedliche große Wirkflächen auf, wobei auf der Seite des Geberzylinders eine erste Wirkfläche und auf der Seite des Ausrückers eine im Vergleich zur ersten Wirkfläche vergrößerte zweite Wirkfläche angeordnet ist, so dass der Druckübersetzer den Betätigungsdruck bei gleichzeitiger Erhöhung der zweiten Wirkfläche am Nehmerzylinder untersetzt, wodurch der Druck von beispielsweise 40 bar auf der Geberzylinderseite auf 5 bar auf der Nehmerzylinderseite reduziert wird.

In den Druckübersetzer ist eine Rückstellfeder integriert, die auf den Kolben in Richtung zur Seite des Geberzylinders mit einer Rückstellkraft wirkt. Wird das Kupplungspedal nicht betätigt, stellt die Feder in der Druckübersetzung sicher, das der Druckkolben wieder in seine Ausgangsposition gelangt, die er bei dem nicht betätigten Kupplungspedal einnimmt.

Die Senkung des Druckes erfordert eine Vergrößerung der hydraulischen Fläche im Nehmerzylinder, um im Vergleich zu Nehmerzylindern mit Ausrücklagern die gleiche Ausrückkraft aufzubringen. Durch die vergrößerte Fläche ist es aber notwendig ein größeres Volumen zu verdrängen, damit der Ausrückweg im Nehmerzylinder mit Drehdurchführung genau dem eines Nehmerzylinders mit Wälzlagern entspricht. Die Verdrängung des notwendigen Volumens wird ebenfalls von der Druckübersetzung erfüllt.

Wird das Kupplungspedal betätigt, wird auf der Geberzylinderseite ein Druck von 40 bar aufgebaut. Durch diesen Druck bewegt sich der Druckkolben aus Richtung des ersten Anschlusses nach unten in Richtung zum zweiten Anschluss und beaufschlagt das System auf der Nehmerzylinderseite mit einem Druck von 5 bar. Bewegt sich das Kupplungspedal wieder in seine Ausgangsposition, reduziert sich der Druck auf der Geberzylinderseite auf Normaldruck. Auf der Nehmerzylinderseite wirkt auf den Kolben der durch die Tellerfedern der Kupplung erzeugte Gegendruck und der Kolben bewegt sich in seine Ausgangsposition. Um sicher zustellen das er wirklich seine Ausgangsposition zurückkehrt, befindet sich in der Druckübersetzung die bereits vorgenannt beschriebene Rückstellfeder. Diese wirkt zusätzlich mit einer Rückstellkraft auf den Kolben in Geberzylinderrichtung.

Erfindungsgemäß ist eine Entlüftung des Druckübersetzers vorgesehen, denn durch schnelles Einkuppeln und unvermeidbare Leckage entsteht in der hydraulischen Strecke ein Unterdruck, der Umgebungsluft in das System fördert. Über die Lebensdauer des Ausrücksystems vermehrt sich die Luft. Dadurch, dass Luft im Vergleich zur Hydraulikflüssigkeit ein kompressibles Fluid ist, verändert sich das Betätigungsverhalten. Dies könnte dazu führen, dass die benötigte Ausrückkraft nicht mehr erreicht wird, die Kupplung nicht mehr vollständig gelüftet wird und somit der Verschleiß der Reibbeläge in der Kupplung unnötig steigt.

Durch die Entlüftung in der Druckübersetzung können Luftblasen aus dem Nehmerzylinder in die Geberzylinderseite aufsteigen und umgekehrt Bremsflüssigkeit von der Geberzylinderseite in die Nehmerzylinderseite strömen. Die Luftblasen steigen von der Druckübersetzung bis zum Geberzylinder und gelangen von dort aus in einen Hydraulikbehälter / Bremsflüssigkeitsbehälter, von dem aus dann Hydraulikflüssigkeit / Bremsflüssigkeit nachströmen kann.

Daher ist erfindungsgemäß eine Entlüftung vorgesehen, die von der Nehmerzylinderseite zur Geberzylinderseite führt.

Die Entlüftung wird durch zumindest einen verschließbaren Spalt zwischen Kolben und Gehäuse ausgebildet, so dass ein die Entlüftung und gewährleistender Stofffluss von der Nehmerzylinderseite auf die Geberzylinderseite im unbetätigten Zustand des Kupplungspedals realisierbar ist, derart, dass Luft von der Nehmerzylinderseite über den Spalt in Richtung Geberzylinderseite aufsteigt und dass bei Betätigung der Kupplung der Spalt abgedichtet ist, wodurch Geber- und Nehmerzylinderseite in zwei Systeme getrennt sind.

Beispielsweise kann der Spalt durch einen auf der Geberzylinderseite angeordneten axial bewegbaren Verschlussdeckel verschließbar sein, auf welchen in Richtung zur Geberzylinderseite eine Entlüftungsfeder wirkt, deren Federkraft kleiner ist als die durch den Betätigungsdruck P1 auf den Verschlussdeckel wirkende Kraft, so dass bei Betätigung der Kupplung der Verschlussdeckel dichtend gegen den Kolben gedrückt wird, wodurch der Spalt geschlossen wird und Geber- und Nehmerzylinderseite in zwei Systeme getrennt sind und wobei im unbetätigten Zustand der Kupplung die Entlüftungsfeder den Verschlussdeckel in Richtung zur Geberzylinderseite abhebt und den Spalt öffnet, so dass ein die Entlüftung gewährleistender Stofffluss von der Nehmerzylinderseite auf die Geberzylinderseite realisierbar ist derart, dass durch die Schwerkraft Hydraulikmedium durch Spalte zwischen Verschlussdeckel, Gehäuse und Kolben in Richtung zur Nehmerzylinderseite fließt und Luft in Richtung Geberzylinderseite aufsteigt. Bei dieser konstruktiven Variante bilden Spalte am Umfang zwischen Verschlussdeckel und Gehäuse bei Betätigung der Kupplung einen Strömungswiderstand für das Hydraulikmedium, der gewährleistet, dass der Verschlussdeckel am Kolben anliegt, bevor sich auf der Nehmerzylinderseite der gleiche Druck wie auf der Geberzylinderseite einstellt und dass bei am Kolben anliegendem Verschlussdeckel sich dieser zusammen mit dem Kolben in Richtung Nehmerzylinderseite bewegt und diese mit dem Druck p2 beaufschlagt. Zwischen Verschlussdeckel und Kolben ist dabei vorteilhafter Weise eine Dichtung in Form einer O-Rings angeordnet, der bei einer Betätigung des Kupplungspedals gewährleistet, dass der Verschlussteckel dichtend am Kolben anliegt und somit Geberzylinderseite und Nehmerzylinderseite zuverlässig getrennt sind. Wird das Kupplungspedal betätigt, entsteht auf der Geberzylinderseite ein Druck von 40 bar und auf dem Verschlussdeckel wirkt eine größere Kraft als die Gegenkraft der Entlüftungsfeder und der Verschlussdeckel liegt auf dem Druckkolben auf. Hierbei wird die Zähigkeit des Fluids bewusst genutzt. Denn die engen Spalte am Umfang des Verschlussdeckels bewirken einen Strömungswiderstand, der von der Zähigkeit der Hydraulikflüssigkeit abhängig ist. Dieser Strömungswiderstand gewährleistet, dass der Deckel geschlossen wird, bevor sich auf der Gegenseite der gleiche Druck einstellt.

Ist der Deckel geschlossen, bewegt sich dieser zusammen mit dem Druckkolben in Richtung Nehmerzylinderseite und beaufschlagt diese mit einem Druck von 5 bar. Diese 5 bar bewirken eine Kraft auf den Ausrückzylinder, der sich dann gegen die Tellerfedern bewegt und die Kupplung entlüftet.

Im unbetätigten Zustand drücken die Tellerfedern der Kupplung auf den Ausrückzylinder des Nehmerzylinders. Dadurch entsteht auf der Nehmerzylinderseite ein größerer Druck als auf der Geberzylinderseite. Das hat zu Folge, dass der Kolben gegen einen ersten gehäuseseitigen Anschlag bewegt wird und Verschlussdeckel gegen einen zweiten gehäuseseitigen Anschlag, so dass zwischen Gehäuse und Verschlussdeckel ein Spalt entsteht. Über diesen Spalt kann die Hydraulikflüssigkeit nach unten in Richtung Nehmerzylinderseite fließen und die Luftblasen können aufsteigen.

Es ist auch möglich, dass der Spalt für die Entlüftung durch ein Spiel zwischen Kolben und Gehäuse und zumindest eine kolbenseitige Ausnehmung gebildet wird, derart, dass Luftblasen im unbetätigten Zustand des Kupplungspedals in Richtung Geberzylinder durch den Spalt aufsteigen und wobei durch zumindest eine stehende Dichtung zwischen Kolben und Gehäuse bei Betätigung des Kupplungspedals durch eine axiale Bewegung des Kolbens in Richtung Nehmerzylinderseite die Dichtung zwischen Gehäuse und Kolben abdichtet und dadurch der Spalt verschlossen ist.

Die Funktionserfüllung der Entlüftung durch stehende Dichtungen und Nuten wird bereits bei Geberzylindern angewandt und lässt auf die Verwendung einer zusätzlich Entlüftungsfeder und eines Verschlussdeckels verzichten.

Die kolbenseitige Ausnehmung wird bevorzugt durch eine Nut gebildet. Über die Nute können Luftblasen im unbetätigten Zustand in Richtung Geberzylinder bis hin zum Bremsflüssigkeitsreservoir aufsteigen und die notwendige Entlüftung ist gewährleistet.

Im unbetätigten drucklosen Zustand können Luftblasen auf der Nehmerzylinderseite durch die Nuten am Druckkolben zur Geberzylinderseite bis hin zum Bremsflüssigkeitsreservoir aufsteigen. Bei Betätigung dagegen verschieben sich die Nuten mit dem Kolben und es erfolgt eine Abdichtung durch die stehenden Dichtungen zwischen Gehäuse und Kolben und Geberzylinder- und Nehmerzylinderseite sind getrennte Systeme.

Eine weitere vorteilhafte Ausgestaltung der Erfindung besteht darin, dass der Druckübersetzer geberzylinderseitig eine durch das Gehäuse führende, bei Betätigung des Kupplungspedals und Bewegung des Kolbens in Richtung Nehmerzylinderseite einen Unterdruck ausgleichende Luftzufuhr aufweist.

Dies ist erforderlich, da sich bei Betätigung des Kupplungspedals sich auf der Geberzylinderseite ein Druck von 40 bar aufbaut, der den Druckkolben nach unten bewegt, um den Ausrückzylinder im Nehmerzylinder gegen die Tellerfederzungen der Kupplung zu drücken und die Kupplung zu lüften, wodurch sich im Druckübersetzer in der hydraulikflüssigkeitsfreien Zone ein Unterdruck aufbaut, der zu einem Leistungsverlust des hydraulischen Systems führt.

Durch den Ausgleich des Unterdrucks kann die Effektivität der Druckübersetzung erhöht werden.

Die Luftzufuhr ist dabei als eine in das Gehäuse führende Öffnung ausgebildet, die mit einer Staubschutzkappe versehen ist. Erfolgt eine Betätigung des Kupplungspedals, bewegt sich der Kolben Richtung Nehmerzylinderseite und das zunehmende Volumen im hydraulikflüssigkeitsfreien/bremsflüssigkeitfreien Raum wird durch den resultierenden Sog mit Umgebungsluft durch die Luftzufuhr gefüllt. Dadurch wird ein Unterdruck vermieden, der dem Betätigungsdruck ansonsten entgegen wirken würde. Beginnt der Einkupplungsvorgang, so wird der Kolben wieder in Richtung Geberzylinderseite bewegt und die eingeströmte Luft durch die Luftzufuhr herausgeleitet. Die Staubschutzkappe verhindert, dass Verunreinigungen aus der Umgebung in das System gelangen. Durch eine oder mehrere Öffnungen in der Staubschutzkappe kann die Luft über die Staubschutzkappe in den Druckübersetzer einströmen.

Die Erfindung wird nachfolgend anhand von Ausführungsbeispielen und zugehörigen Zeichnungen näher erläutert.

Es zeigen:
- Figur 1: ein Beispiel für ein hydraulisches Kraftübertragungssystem zur Kupplungsbetätigung eines Kraftfahrzeuges,
- Figur 2: die Prinzipdarstellung eines Druckübersetzers,
- Figur 3: einen Druckübersetzer gem. Figur 2 bei Betätigung des Kupplungspedals,
- Figur 4: einen Druckübersetzer gem. Figur 2 bei nichtbetätigtem Kupplungspedal,
- Figur 5: einen Druckübersetzer mit Entlüftung mittels eines Verschlussdeckels bei Betätigung des Kupplungspedals,
- Figur 6: einen Druckübersetzer gemäß Figur 5 bei nichtbetätigtem Kupplungspedal,
- Figur 7: Einzelheit gemäß Figur 6,
- Figur 8: einen Druckübersetzer gem. Figur 6 und 7, jedoch mit Druckausgleich bei nichtbetätigtem Kupplungspedal,
- Figur 9: einen Druckübersetzer mit Entlüftung durch zwei stehende Dichtungen, die am Gehäuse fixiert sind bei nichtbetätigtem Kupplungspedal,
- Figur 10: einen Druckübersetzer gemäß Figur 5 bei Betätigung des Kupplungspedals.

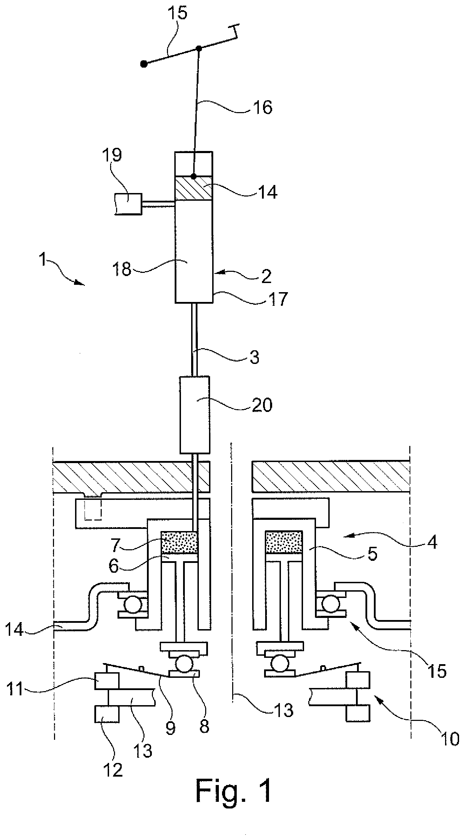

In der Figur 1 ist ein Beispiel für ein hydraulisches Kraftübertragungssystem gezeigt, bei dem für die Kupplungsbetätigung 1 eines Kraftfahrzeuges ein Nehmerzylinder in Form eines deckelfesten Ausrückers 4 eingesetzt wird. Die Kupplungsbetätigung 1 umfasst einen Geberzylinder 2, der durch eine hydraulische Strecke 3 mit dem Nehmerzylinder 4 in Fluid-Verbindung steht. Der Ausrücker 4 ist als zentraler ringförmiger Nehmerzylinder (CSC) ausgebildet. In einem ringförmigen Nehmerzylindergehäuse 5 ist ein ringförmiger Nehmerzylinderkolben 6 gelagert. Der ringförmige Nehmerzylinder 4 und der ringförmige Nehmerzylinderkolben 6 schließen einen wiederum ringförmigen Druckraum 7 ein. Der Nehmerzylinder 4 ist über ein Ausrücklager 8 gelagert und betätigt eine Tellerfeder 9, deren Tellerfederzungen 9.1 dazu am Ausrücklager 8 unter Vorspannung anliegen. Die Tellerfeder 9 dient der Betätigung einer Kupplung 10.
Diese Kupplung 10 umfasst noch eine Druckplatte 11, eine Gegendruckplatte 12 , eine Kupplungsscheibe 13 und einen Kupplungsdeckel 14. Der Ausrücker 4, der auch als Zentralausrücker bezeichnet wird, ist durch ein weiteres Lager 15 an dem Kupplungsdeckel 14 abgestützt beziehungsweise gelagert. Daher spricht man von einem deckelfesten Ausrücker 4.
Die Tellerfeder 9 ist so vorgespannt, dass diese in Vorspannrichtung die Druckplatte 11 auf die Gegendruckplatte 12 drückt und dabei die drehfest mit einer Getriebeeingangswelle verbundene Kupplungsscheibe 13 zwischen der Druckplatte 11 und der Gegendruckplatte 12 einklemmt.
Hierzu sind die Druckplatte 11 und die Gegendruckplatte 12 drehfest mit einer Kurbelwelle einer hier nicht dargestellten Brennkraftmaschine als Antriebseinheit eines Kraftfahrzeugs verbunden. Bei Druckbeaufschlagung des Ausrückers 4 wird demnach die Tellerfeder 9 derart bewegt, dass sie entgegen ihrer Vorspannrichtung den Anpressdruck der Druckplatte 11 in Richtung der Druckplatte 12 verringert und so eine reibschlüssige Verbindung zwischen der Kupplungsscheibe 13 einerseits und der Druckplatte 11 und der Gegendruckplatte 12 andererseits löst. Der Geberzylinder 2 umfasst einen Geberzylinderkolben 14 , der mittels eines Kupplungspedals 15 über eine Druckstange 16 betätigt wird. Ein Geberzylindergehäuse 17 des Geberzylinders 2 und der darin beweglich angeordnete Geberzylinderkolben 14 schließen einen Druckraum 18 ein. Bei drucklosen Systemen ist mit dem Druckraum 18 ein Nachlaufbehälter 19 hydraulisch verbunden.
Die mitdrehenden Nehmerzylinder benötigen eine Drehdurchführung mit zwei hier nicht dargestellten Radialwellendichtringen, die nur für einen begrenzten Druckbereich bis ca. 5 bar eingesetzt werden können. Dies ist möglich, durch einen in der hydraulischen Strecke 3 angeordneten Druckübersetzer 20, der dazu dient, den Betriebsdruck des Geberzylinders 2, der bei der Kupplungsbetätigung auftritt, in der hydraulischen Strecke 3 zum Ausrücker 4 soweit zu senken, dass in dem deckelfesten Ausrücker 4 einfache und kostengünstige Radialwellendichtringe (hier nicht dargestellt) verwendet werden können.

Des Weiteren besteht die Möglichkeit mit der Druckübersetzung die Pedalkraftkennlinie bzw. das Betätigungsverhalten der Kupplung zu modellieren oder es bei der üblichen Kraft-Weg-Übersetzung zu belassen. Insbesondere wird der Betriebsdruck in der hydraulischen Strecke durch den Einsatz des Druckübersetzers von 40 bar auf dessen Eingangsseite, an welche der Geberzylinder 2 angeschlossen ist, auf 5 bar auf dessen Ausgangsseite zum Nehmerzylinder reduziert.

Diese Lösung ist selbstverständlich auch für Doppelkupplungen einsetzbar, bei welchen der Zentralausrücker über zwei Kolben verfügt, wobei jeder Kolben jeweils eine Kupplung betätigt (nicht dargestellt).

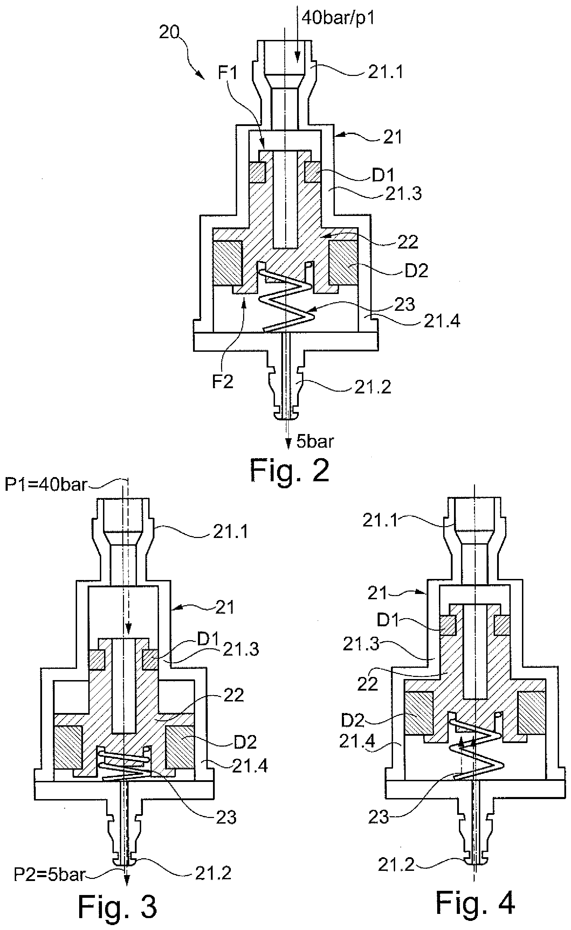

Gemäß Figur 2 bis 4 weist der Druckübersetzer 20 ein Gehäuse 21 auf, in dem ein Kolben 22 axial verschiebbar gelagert ist. Das Gehäuse weist in Richtung zum Geberzylinder auf der Geberzylinderseite einen ersten Anschluss 21.1 und in Richtung zum Nehmerzylinder auf der Nehmerzylinderseite einen zweiten Anschluss 21.2 auf, mit welchen es in die hydraulische Strecke eingebunden wird. Durch zwei unterschiedliche große Wirkflächen F1 auf der Geberzylinderseite und F2 (s. Fig. 2) auf der Nehmerzylinderseite des Kolbens 22 wird realisiert, das der Druck von 40 bar auf der Geberzylinderseite auf 5 bar auf der Nehmerzylinderseite reduziert wird. Wird das hier nicht dargestellte Kupplungspedal nicht betätigt, stellt die eine Rückstellfeder 23 sicher, das der Kolben 22 wieder in die hier dargestellte Ausgangsposition gelangt. Das Gehäuse 21 weist entsprechend der Durchmesserbereiche des Kolbens 22 einen ersten zylinderförmigen Bereich 21.3 auf, in dem der Kolben 22 mit seinem kleineren Durchmesserbereich geführt wird, wobei hier zwischen Gehäuse 21 und Kolben 22 eine erste Dichtung D1 vorgesehen ist. In einem zweiten zylinderförmigen Bereich 21.4 wird der Kolben 22 mit seinem größeren Durchmesserbereich geführt, wobei hier zwischen Kolben 22 und Gehäuse 21 eine zweite Dichtung D2 abdichtet.

Die Senkung des Druckes von 40 bar auf 5 bar erfordert eine Vergrößerung der hydraulischen Fläche im Nehmerzylinder, um im Vergleich zu Nehmerzylindern mit Ausrücklagern die gleiche Ausrückkraft aufzubringen. Durch die vergrößerte Fläche ist es aber notwendig, ein größeres Volumen zu verdrängen, damit der Ausrückweg im Nehmerzylinder mit Drehdurchführung genau dem eines Nehmerzylinders mit Wälzlagern entspricht. Die Verdrängung des notwendigen Volumens wird ebenfalls von der Druckübersetzung erfüllt.

Figur 3 zeigt den Druckübersetzer 20 bei Betätigung des hier nicht dargestellten Kupplungspedals. Wird das Kupplungspedal betätigt, wird auf der Geberzylinderseite ein Druck von 40 bar aufgebaut. Durch diesen Druck bewegt sich der Kolben 22 im Gehäuse 21 entgegen der Kraft der Rückstellfeder 23 nach unten in Richtung des zweiten Anschlusses 21.2 und beaufschlagt das System auf der Nehmerzylinderseite mit einem Druck von 5 bar.

Bewegt sich das Kupplungspedal gemäß Figur 4 wieder in seine Ausgangsposition, reduziert sich der Druck auf der Geberzylinderseite auf Normaldruck. Auf der Nehmerzylinderseite wirkt auf den Kolben 22 ein durch die Tellerfedern der nicht dargestellten Kupplung ein erzeugter Gegendruck und der Kolben 22 bewegt sich ebenfalls in seine Ausgangsposition. Die Rückstellfeder 23 stellt sicher, dass der Kolben 22 wirklich seine Ausgangsposition zurückkehrt, denn diese übt zusätzlich eine Kraft auf den Kolben 22 in Geberzylinderrichtung aus.

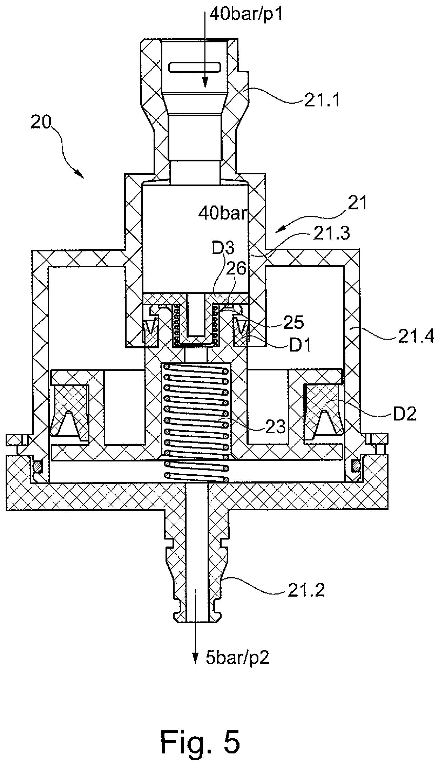

In den Figuren 5 bis 7 wird ein Druckübersetzer dargestellt, bei dem eine Entlüftung mittels eines Verschlussdeckels realisiert wird.

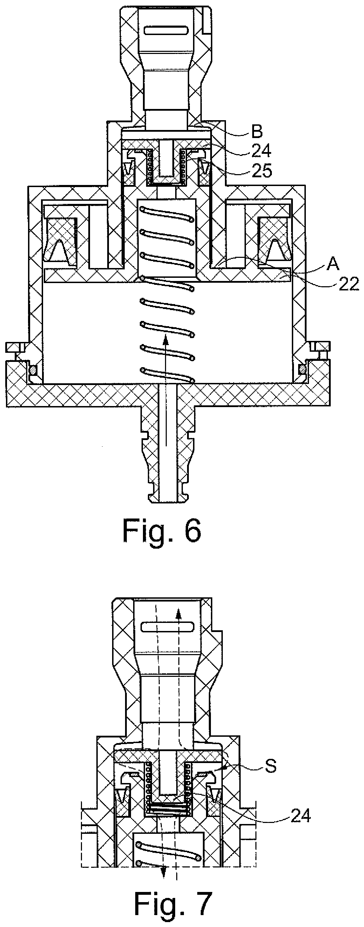

Die Darstellung bei Betätigung des Kupplungspedals zeigt Figur 5 und bei nichtbetätigtem Kupplungspedal Figur 6. Die Einzelheit gemäß Figur 6 ist in Figur 7 dargestellt.
Dabei ist auf der Geberzylinderseite im Kolben 22 ein axialbeweglicher Verschlussdeckel 24 angeordnet, auf welchen in Richtung zur Geberzylinderseite eine Entlüftungsfeder 25 wirkt, deren Federkraft kleiner ist als die durch den Betätigungsdruck P1 auf den Verschlussdeckel 24 wirkende Kraft, so dass bei Betätigung der Kupplung der Verschlussdeckel 24 dichtend gegen den Kolben 22 gedrückt wird, wodurch Geber- und Nehmerzylinderseite in zwei Systeme getrennt sind (Figur 5).

Um eine zuverlässige Abdichtung zu gewährleisten, ist eine dritte Dichtung D3 zwischen Kolben 22 und Verschlussdeckel 24 vorgesehen. Wird somit das Kupplungspedal betätigt, entsteht auf der Geberzylinderseite ein Druck von 40 bar und auf dem
Verschlussdeckel 24 wirkt eine größere Kraft als die Gegenkraft der Entlüftungsfeder 25.

Der Verschlussdeckel 24 liegt auf dem Kolben 22 auf. Hierbei wird die Zähigkeit des Hydraulikfluids bewusst genutzt, denn die engen Spalte S am Umfang des Verschlussdeckels 24 bewirken einen Strömungswiderstand, der von der Zähigkeit des Hydraulikfluids abhängig ist. Dieser Strömungswiderstand gewährleistet, dass der Verschlussdeckel 24 geschlossen wird, bevor sich auf der Gegenseite der gleiche Druck einstellt.

Im unbetätigten Zustand der Kupplung (Figur 6) hebt die Entlüftungsfeder 25 den Verschlussdeckel 24 in Richtung zur Geberzylinderseite ab und ein die Entlüftung gewährleistender Stofffluss von der Nehmerzylinderseite auf die Geberzylinderseite ist realisierbar derart, dass durch die Schwerkraft Hydraulikmedium durch den Spalt S zwischen Verschlussdeckel 24, Gehäuse 21 und Kolben 22 in Richtung zur Nehmerzylinderseite fließt und Luft in Richtung Geberzylinderseite aufsteigt, wie aus der Darstellung in Figur 7 ersichtlich ist.

Dabei drücken die nicht dargestellten Tellerfedern der Kupplung auf den Ausrückzylinder des Nehmerzylinders. Dadurch entsteht auf Nehmerzylinderseite ein größerer Druck als auf Der Geberzylinderseite. Das hat zu Folge, dass der Kolben 22 gegen den Anschlag A des Gehäuses 21 bewegt wird und der Verschlussdeckel 24 der Entlüftung gegen den Anschlag (B). Dadurch wird der Spalt S freigegeben.

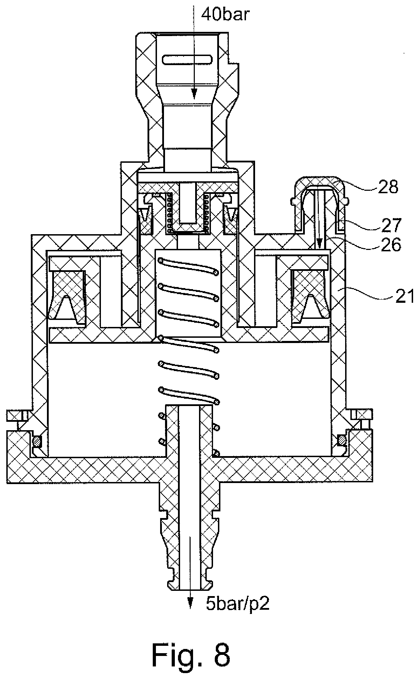

In Figur 8 ist ein Druckübersetzer dargestellt, der im Wesentlichen wie in den Figuren 6 und 7 aufgebaut ist, jedoch weist dieser zusätzlich eine geberzylinderseitig durch das Gehäuse 21 führende, bei Betätigung des Kupplungspedals und Bewegung des Kolbens 22 in Richtung Nehmerzylinderseite einen Unterdruck ausgleichende Luftzufuhr 26 auf, die als Bohrung durch das Gehäuse 21 führt und die einen Anschlussbereich 27 aufweist, der mit einer Staubschutzkappe 28 versehen ist.

Bei Betätigung des nicht dargestellten Kupplungspedals bewegt sich der Kolben 22 Richtung zur Nehmerzylinderseite. Das zunehmende Volumen im Bremsflüssigkeitfreien Raum wird durch den resultierenden Sog mit Umgebungsluft durch die Luftzufuhr 26 gefüllt. Dadurch wird ein Unterdruck vermieden, der dem Betätigungsdruck ansonsten entgegen wirken würde.

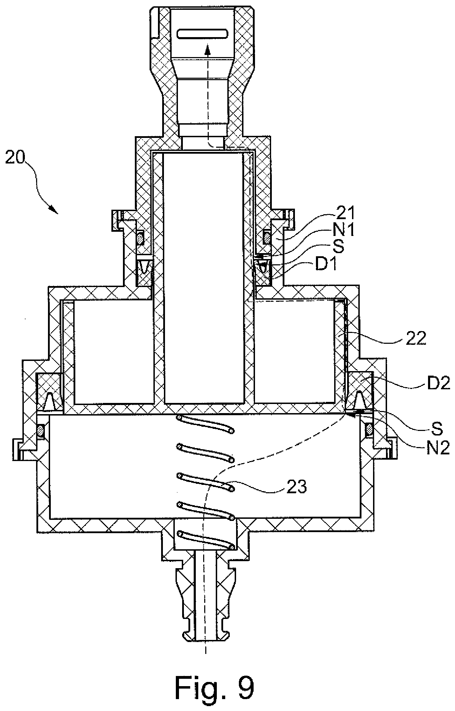

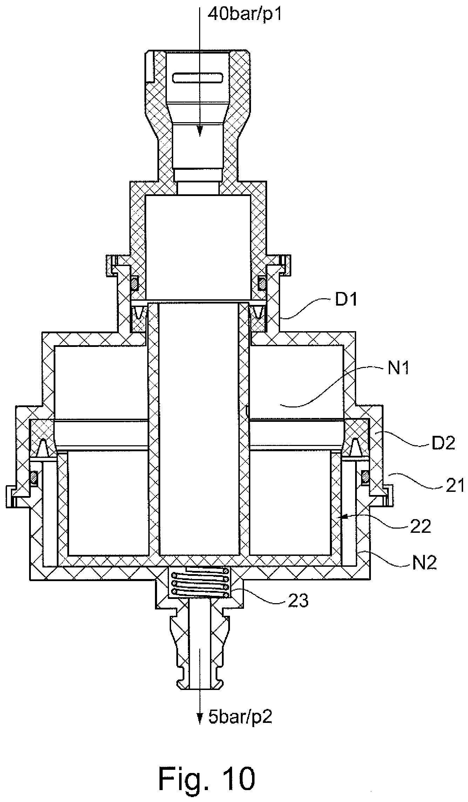

Ein Druckübersetzer 20 mit einer weiteren Variante der Entlüftung ist in den Figuren 9 und 10 dargestellt. Dabei zeigt Figur 9 die Variante mit zwei stehende Dichtungen D1, D2, die am Gehäuse 21 fixiert sind bei nichtbetätigtem Kupplungspedal und Figur 2 den Druckübersetzer bei Betätigung des Kupplungspedals.

Auch hier wird durch zwei hier nicht bezeichnete unterschiedliche große Wirkflächen des Kolbens 22 realisiert, dass der Druck von 40 bar auf der Geberzylinderseite auf 5 bar auf der Nehmerzylinderseite reduziert wird. Wird das Kupplungspedal (nicht dargestellt) gemäß Figur 9 nicht betätigt, stellt die Rückstellfeder 23 in dem Druckübersetzer sicher, das der Kolben 22 wieder in seine hier dargestellte Ausgangsposition gelangt.

Über eine erste Nut N1 im ersten Bereich des Kolbens 22 mit dem geringeren Durchmesser und eine zweite Nut N2 im zweiten Bereich des Kolbens 22 mit dem größeren Durchmesser kann die Luft (Luftblasen), hier gemäß der punktierten Linie im unbetätigten Zustand in Richtung Geberzylinder bis hin zum Bremsflüssigkeitsreservoir (nicht dargestellt) aufsteigen und die notwendige Entlüftung ist gewährleistet. Durch die erste und zweite Nut wird dabei in dieser Position des Druckübersetzers jeweils ein Spalt S zwischen der ersten und zweiten Dichtung und dem Kolben 22 realisiert.

Bei betätigtem Kupplungspedal wird gemäß Figur 10 auf der Geberzylinderseite ein Druck von 40 bar aufgebaut. Durch diesen Druck bewegt sich der Kolben 22 nach unten, wodurch sich die Nuten N1, N2 nicht mehr im Bereich der ersten und zweiten Dichtung D1, D2 befinden, Dadurch dichten nun die erste und zweite Dichtung D1 und D2 zwischen Kolben 22 und Gehäuse 21 ab und die Nehmerzylinderseite wird mit einem Druck von 5 bar beaufschlagt..

Bewegt sich das Kupplungspedal (nicht dargestellt) wieder in seine Ausgangsposition, reduziert sich der Druck auf der Geberzylinderseite auf Normaldruck. Auf der Nehmerzylinderseite wirkt auf den Kolben 2der durch die Tellerfedern der Kupplung (nicht dargestellt) erzeugte Gegendruck und der Kolben 22 bewegt sich in die in Figur 9 dargestellte Ausgangsposition. Um sicher zustellen das er wirklich in seine Ausgangsposition zurückkehrt, ist auch hier eine Rückstellfeder 23 vorgesehen. Diese übt zusätzlich eine Kraft auf den Kolben 22 in Geberzylinderrichtung aus.

### Bezugszeichenliste

- 1: Kupplungsbestätigung
- 2: Geberzylinder
- 3: hydraulische Strecke
- 4: Nehmerzylinder
- 5: Nehmerzylindergehäuse
- 6: Nehmerzylinderkolben
- 7: Druckraum
- 8: Ausrücklager
- 9: Tellerfeder
- 9.1: Tellerfederzungen
- 10: Kupplung
- 11: Druckplatte
- 12: Gegendruckplatte
- 13: Kupplungsscheibe
- 14: Kupplungsdeckel
- 15: Lager
- 16: Druckstange
- 17: Geberzylindergehäuse
- 18: Druckraum
- 19: Nachlaufbehälter

- 20: Druckübersetzer
- 21: Gehäuse
- 21.1: erster Anschluss 21.1
- 21.2: zweiter Anschluss
- 21.3: erster zylinderförmiger Bereich
- 21.4: zweiter zylinderförmiger Bereich
- 22: Kolben
- 23: Rückstellfeder
- 24: Verschlussdeckel
- 25: Entlüftungsfeder
- 26: Luftzufuhr
- 27: Anschlussbereich 27 aufweist, der mit einer
- 28: Staubschutzkappe
- A: Anschlag
- B: Anschlag
- D1: erste Dichtung
- D2: zweite Dichtung
- D3: dritte Dichtung
- F1: Wirkflächen auf der Geberzylinderseite
- F2: Wirkfläche auf der Nehmerzylinderseite
- N1: erste Nut
- N2: zweite Nut
- S: Spalt

## Patentansprüche

1. Hydraulische Strecke (3) zwischen einem Geberzylinder (2) und einem Nehmerzylinder (4), insbesondere in Form eines deckelfesten Ausrückers, wobei in die hydraulische Strecke (3) mindestens ein Mittel zur Reduzierung eines über den Geberzylinder (2) bei Betätigung eines Kupplungspedals auf den Nehmerzylinder (4) wirkenden Betätigungsdrucks integriert ist, wobei das Mittel in Form eines Druckübersetzers (20) ausgebildet ist,
wobei der Druckübersetzer (20) einen ersten Anschluss (21.2) zum Geberzylinder (2) und einen zweiten Anschluss (21.2) zum Nehmerzylinder (4) aufweist und wobei bei Betätigung eines Kupplungspedals ein Betätigungsdruck (p1) des Geberzylinders (2) mittels eines Kolbens (22) auf einen geringeren auf den Nehmerzylinder (4) wirkenden Betätigungsdruck (p2) reduzierbar ist, **dadurch gekennzeichnet, dass** der Kolben (22) in ein Gehäuse (21) integriert ist, welches den ersten Anschluss (21.1) zum Geberzylinder (2) und den zweiten Anschluss (21.2) zum Nehmerzylinder (24) aufweist und dass der Kolben (22) im Gehäuse (21) axial verschiebbar angeordnet ist und zwei unterschiedliche große Wirkflächen aufweist, wobei auf der Seite des Geberzylinders (2) eine erste Wirkfläche (F1) und auf der Seite des Nehmerzylinders (4) eine im Vergleich zur ersten Wirkfläche vergrößerte zweite Wirkfläche (F2) angeordnet ist, so dass der Druckübersetzer (20) den Betätigungsdruck (p1) bei gleichzeitiger Erhöhung der zweiten Wirkfläche am Nehmerzylinder (4) auf den Druck (p2) untersetzt und dass der Druckübersetzer eine Entlüftung aufweist, die von der Nehmerzylinderseite zur Geberzylinderseite führt und dass die Entlüftung durch zumindest einen verschließbaren Spalt (S) zwischen Kolben (22) und Gehäuse (21) ausgebildet ist, so dass ein die Entlüftung gewährleistender Stofffluss von der Nehmerzylinderseite auf die Geberzylinderseite im unbetätigten Zustand des Kupplungspedals realisierbar ist, derart, dass Luft von der Nehmerzylinderseite über den Spalt (S) in Richtung Geberzylinderseite aufsteigt und dass bei Betätigung der Kupplung der Spalt (S) abgedichtet ist, wodurch Geber- und Nehmerzylinderseite in zwei Systeme getrennt sind.

2. Hydraulische Strecke nach Anspruch 1, **dadurch gekennzeichnet, dass** in den Druckübersetzer (20) eine Rückstellfeder (23) integriert ist, die auf den Kolben (22) in Richtung zur Seite des Geberzylinders mit einer Rückstellkraft wirkt.

3. Hydraulische Strecke nach Anspruch 1 oder 2, **dadurch gekennzeichnet, dass** der Spalt (S) durch einen auf der Geberzylinderseite angeordneten axial bewegbaren Verschlussdeckel (24) verschließbar ist, auf welchen in Richtung zur Geberzylinderseite eine Entlüftungsfeder (25) wirkt, deren Federkraft kleiner ist als die durch den Betätigungsdruck (p1) auf den Verschlussdeckel (24) wirkende Kraft, so dass bei Betätigung der Kupplung der Verschlussdeckel (24) dichtend gegen den Kolben (22) gedrückt wird, wodurch Geber- und Nehmerzylinderseite in zwei Systeme getrennt sind und dass im unbetätigten Zustand der Kupplung die Entlüftungsfeder (25) den Verschlussdeckel (24) in Richtung zur Geberzylinderseite abhebt und ein die Entlüftung gewährleistender Stofffluss von der Nehmerzylinderseite auf die Geberzylinderseite realisierbar ist derart, dass durch die Schwerkraft Hydraulikmedium durch Spalte (S) zwischen Verschlussdeckel (24), Gehäuse (21) und Kolben (22) in Richtung zur Nehmerzylinderseite fließt und Luft in Richtung Geberzylinderseite aufsteigt.

4. Hydraulische Strecke nach Anspruch 3, **dadurch gekennzeichnet, dass** der/die Spalte (S) am Umfang zwischen Verschlussdeckel (24) und Gehäuse (21) bei Betätigung der Kupplung einen Strömungswiderstand für das Hydraulikmedium bilden der gewährleistet, dass der Verschlussdeckel (24) am Kolben (22) anliegt, bevor sich auf der Nehmerzylinderseite der gleiche Druck wie auf der Geberzylinderseite einstellt und dass bei am Kolben (22) anliegendem Verschlussdeckel (24) sich dieser zusammen mit dem Kolben (22) in Richtung Nehmerzylinderseite bewegt und diese mit dem Druck (p2) beaufschlagt.

5. Hydraulische Strecke nach Anspruch 3, **dadurch gekennzeichnet, dass** der Spalt (S) durch ein Spiel zwischen Kolben (22) und Gehäuse (21) und zumindest eine kolbenseitige Ausnehmung gebildet wird, derart, dass Luftblasen im unbetätigten Zustand des Kupplungspedals in Richtung Geberzylinder durch den Spalt (S) aufsteigen und wobei durch zumindest eine stehende Dichtung zwischen Kolben (22) und Gehäuse (21) bei Betätigung des Kupplungspedals durch eine axiale Bewegung des Kolbens (22) in Richtung Nehmerzylinderseite die Dichtung zwischen Gehäuse (21) und Kolben (22) abdichtet und dadurch der Spalt (S) verschlossen ist.

6. Hydraulische Strecke nach einem der Ansprüche 1 bis 5, **dadurch gekennzeichnet, dass** dieser geberzylinderseitig eine durch das Gehäuse (21) führende, bei Betätigung des Kupplungspedals und Bewegung des Kolbens (22) in Richtung Nehmerzylinderseite einen Unterdruck ausgleichende Luftzufuhr (26) aufweist.

## Claims

1. A hydraulic line (3) between a master cylinder (2) and a slave cylinder (4), in particular in the form of a release mechanism secured to the cover, wherein at least one means for an actuating pressure acting on said slave cylinder (4) via said master cylinder (2) when a clutch pedal is actuated is integrated in the hydraulic line (3), wherein the means is configured in the form of a pressure intensifier (20),
wherein the pressure intensifier (20) has a first connection (21.2) to the master cylinder (2) and a second connection (21.2) to the slave cylinder (4) and wherein an actuating pressure (p1) of the master cylinder (2) can be reduced by means of a piston (22) to a lower actuating pressure (p2) acting on the slave cylinder (4) when a clutch pedal is actuated, **characterised in that** the piston (22) is integrated in a housing (21) which has the first connection (21.1) to the master cylinder (2) and has the second connection (21.2) to the slave cylinder (24) and **in that** the piston (22) is arranged to be axially displaceable in the housing (21) and has two different large active areas, wherein a first active area (F1) is arranged on the side of the master cylinder (2) and a second active area (F2), which is larger than the first active area, is arranged on the side of the slave cylinder (4), so that the pressure intensifier (20) reduces the actuating pressure (p1) to the pressure (p2) while simultaneously increasing the active area on the slave cylinder (4), and **in that** the pressure intensifier has a venting means that leads from the slave cylinder side to the master cylinder side and **in that** the venting means is formed by at least one closable gap (S) between the piston (22) and the housing (21), so that a material flow from the slave cylinder side to the master cylinder side that ensures ventilation can be realised when the clutch pedal is not actuated, such that air rises from the slave cylinder side via the gap (S) in the direction of the master cylinder side, and **in that**, when the clutch is actuated, the gap (S) is sealed, whereby the master and slave cylinder sides are separated into two systems.

2. The hydraulic line according to claim 1, **characterised in that** a return spring (23) is integrated in the pressure intensifier (20) and acts with a return force on the piston (22) in the direction towards the side of the master cylinder.

3. The hydraulic line according to claim 1 or 2, **characterised in that** the gap (S) can be closed by an axially movable sealing cover (24) arranged on the master cylinder side, on which a ventilation spring (25) acts in the direction of the master cylinder side, the spring force of which is less than the force acting on the sealing cover (24) through the actuating pressure (p1), so that, when the clutch is actuated, the sealing cover (24) is pressed sealingly against the piston (22), whereby the master and slave cylinder sides are separated into two systems and **in that**, when the clutch is not actuated, the venting spring (25) lifts the sealing cover (24) in the direction of the master cylinder side, and a material flow from the slave cylinder side to the master cylinder side that ensures the venting means can be realised such that hydraulic medium flows by gravity through gaps (S) between the sealing cover (24), the housing (21) and the piston (22) in the direction of the slave cylinder side and air rises in the direction of the master cylinder side.

4. The hydraulic line according to claim 3, **characterised in that** the gap(s) (S) on the circumference between the sealing cover (24) and the housing (21) form(s) a flow resistance for the hydraulic medium when the clutch is actuated, which ensures that the sealing cover (24) rests against the piston (22) before the same pressure is established on the slave cylinder side as on the master cylinder side, and **in that**, when the sealing cover (24) rests against the piston (22), this moves together with the piston (22) in the direction of the slave cylinder side and applies pressure (p2) thereto.

5. The hydraulic line according to claim 3, **characterised in that** the gap (S) is formed by a clearance between the piston (22) and the housing (21) and at least one recess is formed on the piston side, such that air bubbles rise through the gap (S) in the direction of the master cylinder when the clutch pedal is not actuated, and wherein at least one stationary seal between the piston (22) and the housing (21) seals the seal between the housing (21) and the piston (22) when the clutch pedal is actuated by an axial movement of the piston (22) in the direction of the slave cylinder side, and the gap (S) is thereby closed.

6. The hydraulic line according to any one of claims 1 to 5, **characterised in that** it has an air supply (26) on the master cylinder side leading through the housing (21) and compensating a negative pressure when the clutch pedal is actuated and movement of the piston (22) in the direction of the slave cylinder side.

## Revendications

1. Parcours hydraulique (3) entre un cylindre émetteur (2) et un cylindre récepteur (4), en particulier sous forme de dispositif de débrayage solidaire du plateau de fermeture, au moins un moyen pour réduire une pression d'actionnement agissant sur le cylindre récepteur (4) par l'intermédiaire du cylindre émetteur (2) lors de l'actionnement d'une pédale d'embrayage étant intégré dans le parcours hydraulique (3), le moyen étant conçu sous la forme d'un convertisseur de pression (20),
le convertisseur de pression (20) présentant une première liaison (21.2) au cylindre émetteur (2) et une seconde liaison (21.2) au cylindre récepteur (4) et lorsqu'une pédale d'embrayage est actionnée, une pression d'actionnement (p1) du cylindre émetteur (2) peut être réduite, au moyen d'un piston (22), à une pression d'actionnement inférieure (p2) agissant sur le cylindre récepteur (4), **caractérisé en ce que** le piston (22) est intégré dans un logement (21) qui présente la première liaison (21.1) au cylindre émetteur (2) et la seconde liaison (21.2) au cylindre récepteur (24) et **en ce que** le piston (22) est disposé pour se déplacer axialement dans le logement (21) et présente deux surfaces actives de tailles différentes, sur le côté du cylindre émetteur (2), une première surface active (F1) et, sur le côté du cylindre récepteur (4), une seconde surface active (F2) plus grande par rapport à la première surface active étant disposées de manière à ce que le convertisseur de pression (20) augmente la pression d'actionnement (p1) en augmentant simultanément la seconde surface active sur le cylindre récepteur (4) pour la mettre sous pression (p2) et **en ce que** le convertisseur de pression présente une ventilation qui mène du côté du cylindre récepteur au côté cylindre émetteur et **en ce que** la ventilation est conçue sous la forme d'au moins une fente obturable (S) entre le piston (22) et le logement (21), de manière à ce qu'un flux de matière assurant la ventilation puisse être réalisé du côté du cylindre récepteur vers le côté du cylindre émetteur à l'état non actionné de la pédale d'embrayage, de telle sorte que l'air monte du côté du cylindre récepteur par la fente (S) en direction du côté du cylindre émetteur et que, lorsque l'embrayage est actionné, la fente (S) soit rendue étanche, les côtés cylindre émetteur et cylindre récepteur étant ainsi séparés en deux systèmes.

2. Parcours hydraulique selon la revendication 1, **caractérisé en ce qu'**un ressort de rappel (23) est intégré dans le convertisseur de pression (20) et agit sur le piston (22) en direction du côté du cylindre émetteur avec une force de rappel.

3. Parcours hydraulique selon la revendication 1 ou 2, **caractérisé en ce que** la fente (S) peut être fermée par un couvercle de fermeture (24) mobile axialement et disposé du côté du cylindre émetteur, sur lequel un ressort de purge (25) agit en direction du côté du cylindre émetteur et dont la force de ressort est inférieure à la force agissant sur le couvercle de fermeture (24) par la pression d'actionnement (p1), de sorte que lorsque l'embrayage est actionné, le couvercle de fermeture (24) soit pressé de manière étanche contre le piston (22), les côtés cylindre émetteur et cylindre récepteur étant séparés en deux systèmes et **en ce que**, à l'état non actionné de l'embrayage, le ressort de purge (25) soulève le couvercle de fermeture (24) en direction du côté du cylindre émetteur et un flux de matière assurant la ventilation du côté du cylindre récepteur en direction du côté du cylindre émetteur peut être réalisé de telle sorte que la gravité force le fluide hydraulique à s'écouler par les fentes (S) entre le couvercle de fermeture (24), le logement (21) et le piston (22) en direction du côté du cylindre récepteur et que l'air monte en direction du côté du cylindre émetteur.

4. Parcours hydraulique selon la revendication 3, **caractérisé en ce que** la/les fentes (S) sur la circonférence entre le couvercle de fermeture (24) et le logement (21) forment une résistance à l'écoulement du fluide hydraulique lorsque l'embrayage est actionné, qui garantit que le couvercle de fermeture (24) repose sur le piston (22) avant que la pression du côté du cylindre récepteur ne soit la même que celle du côté du cylindre émetteur et que, lorsque le couvercle de fermeture (24) est en contact avec le piston (22), celui-ci se déplace avec le piston (22) en direction du côté du cylindre récepteur et le sollicite avec la pression (p2).

5. Parcours hydraulique selon la revendication 3, **caractérisé en ce que** la fente (S) est formée par un jeu entre le piston (22) et le logement (21) et au moins un évidement côté piston, de sorte que des bulles d'air, à l'état non actionné de la pédale d'embrayage, montent en direction du cylindre émetteur par la fente (S) et le joint entre le logement (21) et le piston (22) est scellé par au moins un joint présent entre le piston (22) et le logement (21) lorsque la pédale d'embrayage est actionnée par un mouvement axial du piston (22) en direction du côté du cylindre récepteur. fermant ainsi la fente (S).

6. Parcours hydraulique selon l'une quelconque des revendications 1 à 5, **caractérisé en ce qu'**il présente, du côté du cylindre émetteur, une alimentation en air (26) traversant le logement (21) et compensant une dépression lorsque la pédale d'embrayage est actionnée et le piston (22) se déplace en direction du cylindre récepteur.
